(19) Europäisches Patentamt

European Patent Office

Office européen des brevets

(11) **EP 0 392 900 B2**

(12) **NOUVEAU FASCICULE DE BREVET EUROPEEN**

(45) Date de publication et mention de la
décision concernant l'opposition:
**14.01.1998 Bulletin 1998/03**

(45) Mention de la délivrance du brevet:
**09.06.1993 Bulletin 1993/23**

(21) Numéro de dépôt: **90400940.4**

(22) Date de dépôt: **05.04.1990**

(51) Int. Cl.$^6$: **A23L 3/36**, B01J 10/00,
B01J 19/26, C01B 17/04,
C01G 21/06, C22B 9/05,
C22B 21/06, D21C 3/02

(54) **Procédé et installation de traitement d'un liquide avec un gaz**

Verfahren und Vorrichtung für die Behandlung einer Flüssigkeit mit einem Gas

Process and apparatus for the treatment of a liquid with a gas

(84) Etats contractants désignés:
**BE CH DE ES FR GB IT LI NL SE**

(30) Priorité: **11.04.1989 FR 8904746**

(43) Date de publication de la demande:
**17.10.1990 Bulletin 1990/42**

(73) Titulaire:
**L'AIR LIQUIDE, SOCIETE ANONYME POUR
L'ETUDE ET L'EXPLOITATION DES PROCEDES
GEORGES CLAUDE
75321 Paris Cédex 07 (FR)**

(72) Inventeur: **Garrido, Guillermo
F-78590 Noisy-Le-Roi (FR)**

(74) Mandataire:
**Le Moenner, Gabriel et al
L'AIR LIQUIDE, Société Anonyme
pour l'étude et l'exploitation des procédés
Georges Claude
75, Quai d'Orsay
75321 Paris Cédex 07 (FR)**

(56) Documents cités:
**EP-A- 0 073 729        EP-B- 0 092 983
CH-B-   370 057        DE-A- 2 851 802
GB-A- 2 177 618**

• **Ullmanns Encyklopädie der technischen
Chemie, 4. Aufl., Band 3, 1973, pp. 356-359, 372-
375, 388-389, 398-401**

**Description**

La présente invention concerne un procédé de traitement d'un liquide avec un gaz de traitement que l'on insuffle à l'aide d'un injecteur de gaz immergé dans un bain dudit liquide. Ce mode de transfert, qui s'effectue par formation d'une multitude de bulles de gaz dans le liquide, permet d'accroître au maximum l'interface gaz/liquide, d'assurer un temps de séjour le plus long possible du gaz dans le bain et de créer un régime d'écoulement turbulent propice aux transferts thermique et massique.

Il arrive cependant que les bulles ainsi formées ont du mal à pénétrer dans le bain et ont tendance à revenir se grouper contre le débouché de l'injecteur formant ainsi de grosses bulles qui remontent alors rapidement à la surface du bain sans remplir les fonctions rappelées plus haut. On explique ce phénomène indésirable par le fait que le flux gazeux issu de l'injecteur n'a pas une quantité de mouvement (produit "masse vitesse") qui soit suffisante pour induire la turbulence indispensable. C'est le cas de traitement des fluides newtoniens, comme de métaux liquides ou des pâtes visqueuses. Outre l'inconvénient mentionné plus haut de la faible utilisation du gaz de traitement, on note qu'en traitement à haute température avec de l'oxygène réagissant de façon exothermique avec le liquide, il y a formation de points chauds au niveau du débouché de l'injecteur, avec risque de destruction de l'extrémité de l'injecteur.

Le document EP-A-0.073.729 décrit un dispositif rotatif de dispersion de gaz pour le traitement d'un bain de métal liquide comprenant un rotor immergé comportant des palettes de brassage, des canaux inclinés de passage de liquide et des canaux radiaux de passage de gaz débouchant dans l'extrémité de sortie des passages de liquide, le métal liquide se déplaçant dans les canaux de passage de liquide sous l'effet de la force centrifuge engendrée par la rotation du rotor.

La présente invention a pour objet un procédé de traitement d'un liquide avec un gaz, de mise en oeuvre simple et souple, permettant une utilisation plus efficace du gaz de traitement dans de nombreuses applications et évitant, pour le traitement de métaux liquides avec des gaz oxydants, la formation de points chauds localisés à température excessive au niveau du débouché de l'injecteur.

Le procédé selon l'invention est conforme à la revendication 1.

L'expérience montre alors que les bulles gazeuses sont éloignées de force du débouché de l'injecteur et que tout regroupement de bulles est écarté. C'est grâce à l'adjonction de la quantité de mouvement significative offerte par le déplacement du liquide que ce résultat est obtenu. En outre, on induit dans le bain du liquide en cours de traitement des turbulences qui favorisent une homogénéisation rapide de la phase liquide et donc une meilleure inter-action gaz-liquide à traiter.

L'invention a également pour objet une installation de traitement conformément à la revendication 5.

L 'invention vise également un certain nombre d'applications du procédé et de l'installation rappelés ci-dessus.

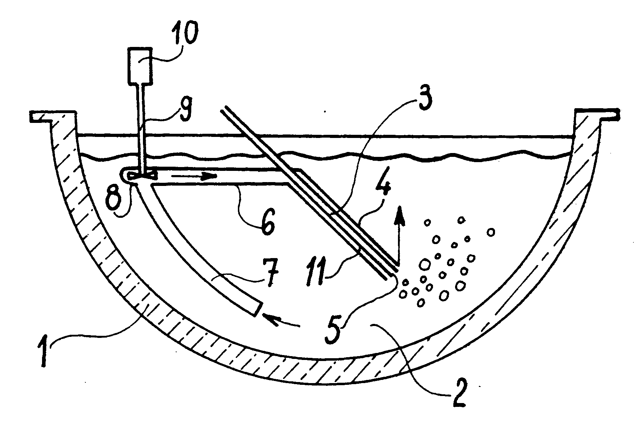

Les caractéristiques et avantages de l'invention ressortiront d'ailleurs de la description qui suit, faite en référence au dessin annexé qui est une vue schématique en coupe d'une installation, appliquée à titre d'exemple à l'affinage du plomb, dans lequel l'injecteur est une lance à gaz.

En se référant au dessin, une cuve hémisphérique 1 contient du plomb impur, la température du bain fluctuant entre 550°C et 600°C. Une lance à oxygène 3 plonge largement dans le bain et cette lance à oxygène 3 est enveloppée à faible distance d'un fourreau coaxial 4 qui, à distance d'un débouché 5 de la lance 3, mais encore dans le bain de plomb 2, est raccordé par une conduite 6 à la sortie d'une pompe de recirculation immergée 8 à arbre menant émergeant en 9 et entraîné par un moteur 10, la pompe 10 prélevant du plomb liquide par une conduite 7 s'étendant au voisinage du fond de la cuve 1. La lance à oxygène 3 comprend une partie linéaire terminale dans le bain de plomb qui est inclinée par rapport à la verticale d'un angle de 40° environ.

La pompe de recirculation est construite en acier, acier inoxydable ou un alliage métallique ou bien est réalisée en céramique ou en graphite, ou encore la pompe de recirculation et les conduits 4, 6 et 7 sont réalisés en un métal ou alliage métallique, avec un revêtement interne de céramique ou de graphite, ou en matériel dit composite, pour éviter l'attaque chimique ou thermique de la pompe et des conduits.

En fonctionnement, pendant l'affinage, de l'oxygène industriel, c'est-à-dire de l'oxygène presque pur, est envoyé dans le bain de plomb liquide. Simultanément, la pompe de recirculation 8 envoie dans le conduit annulaire 11, entre la lance à oxygène 3 et le fourreau 4, un débit de plomb liquide prélevé du bain de plomb, qui débouche autour du courant d'oxygène issu de la lance 3. L'effet de courant de plomb est protecteur pour l'extrémité de la lance, grâce à l'action d'éloignement de bulles d'oxygène qu'il provoque et cet effet est encore favorisé par l'inclinaison de la lance. En outre, la circulation du plomb favorise le brassage du bain.

Bien que dans la plupart des applications les débouchés des conduits de gaz et du liquide protecteur seront coaxiaux, en raison de la plus basse densité du gaz relative à celle du liquide, il est quelquefois souhaitable de positionner le débouché de l'injecteur de gaz codirectionnellement vers la partie inférieure de la section du conduit de liquide protecteur, pour mieux profiter de l'entraînement des bulles et le plus long temps de séjour du gaz dans le courant liquide. Pour la même raison, il est toujours préférable de garder les axes de sortie dans un même plan vertical.

On détaille maintenant quelques exemples d'application de l'invention:

EXEMPLE I : L'affinage du plomb.

Un cas particulier d'application de cette invention correspond à l'élimination d'antimoine, arsenic et étain du plomb liquide par l'oxygène gazeux. L'affinité préférentielle de l'oxygène pour ces impuretés permet leur séparation sous forme d'oxydes accumulés dans le laitier. La technique actuelle met en oeuvre une introduction d'air suroxygéné (60 % $O_2$) par une lance immergée verticalement dans le bain.

Une opération typique d'affinage a lieu dans une cuve hémisphérique de 2 m de profondeur, contenant 200 tonnes de plomb. La température du bain fluctue entre 550°C et 600°C. Le cycle d'affinage est de 20 h si on souffle de l'air non enrichi en oxygène. Avec un mélange 50 % : air, 50 % : oxygène, la durée est réduite à 12 h. Si on injecte de l'oxygène pur sans précaution supplémentaire, la lance est rapidement détruite. On note également que la haute concentration d'oxygène provoque une augmentation considérable de pertes de plomb sous forme de PbO au laitier.

Pour surmonter ces difficultés, selon la présente invention, on utilise un débit forcé de plomb liquide pour assister l'injection d'oxygène pur, comme représenté au dessin décrit plus haut.

La technique décrite ci-dessus, qui nécessite l'utilisation d'une pompe en acier, est facilement adaptable à un procédé en continu de traitement du plomb ou d'autres bains métalliques avec un point de fusion en-dessous de 750°C.

EXEMPLE II : L'industrie alimentaire.

Le refroidissement de liquides à pulpes alimentaires par des fluides cryogéniques est difficile à cause de la congélation rapide mais localisée du bain, ce qui bloque la décharge de l'injecteur de fluide froid. La recirculation forcée d'une partie de cette pulpe autour du fluide cryogénique permet une meilleure dissipation du froid, et en même temps favorise des turbulences. Très souvent, le réservoir dans lequel cette opération a lieu est équipé d'un agitateur mécanique. Bien que les deux techniques soient compatibles et puissent être complémentaires, il a été démontré que dans le cas de pulpes denses, le rendement énergétique de l'agitation par convection forcée du liquide "vecteur" est meilleur que celui de l'agitation mécanique.

EXEMPLE III : La délignification de la cellulose.

L'injection d'oxygène ou du peroxyde d'hydrogène peut être améllorée considérablement par la recirculation de la pâte en un courant s'écoulant autour du débouché du fluide oxydant.

EXEMPLE IV : Dégazage d'aluminium.

Pour réduire la teneur en hydrogène de l'aluminium liquide, on réalise un barbotage avec un gaz neutre, soit azote, argon, hexafluorure de soufre, quelquefois avec un dopage au chlore. Ce gaz est injecté à travers des bouchons poreux réfractaires, dont les bulles de gaz sortent avec une très basse vitesse. L'intéraction des bulles et l'aluminium est faible, et le rendement du traitement l'est aussi. Selon l'invention, on induit une turbulence avec une pompe d'aluminium liquide dont le gaz d'affinage étant introduit avec et par le courant d'aluminium forcé par la pompe.

EXEMPLE V : Production en phase liquide de soufre à partir de l'hydrogène sulfureux.

La réaction

$$H_2S_{(g)} + 1/2\ O_{2(g)} \rightarrow S_{(1)} + H_2O$$

est réalisée en continu en injectant les gaz dans le soufre liquide en présence d'un catalyseur. Le rendement de la réaction augmente avec une pression partielle d'oxygène plus élevée. On peut injecter de l'oxygène pur si on l'introduit avec un débit de soufre liquide pour éloigner le point chaud de l'extrémité de l'injecteur. La recirculation du soufre liquide est effectuée par une pompe métallique.

EXEMPLE VI : Traitement ou regénération de liquides divers.

Le procédé selon l'invention trouve une application privilégiée dans le traitement d'effluents industriels par de l'oxygène, la régulation de PH d'effluents industriels, de l'eau de consommation et dans des process industriels pour, notamment, la papeterie, la teinturerie et la tannerie, ainsi que la dénitrification de l'eau potable par de l'hydrogène.

**Revendications**

1. Procédé de traitement d'un liquide avec un gaz de traitement que l'on insuffle par au moins un débouché (5) d'un injecteur de gaz (3) immergé dans un bain (2) dudit liquide simultanément à l'éjection, au voisinage immédiat du débouché (5), d'un courant du liquide prélevé dans le bain, caractérisé en ce que le gaz est insufflé par le débouché (5) dans une direction déterminée et en ce qu'on fait circuler du liquide prélevé dans le bain dans un circuit de circulation (7,6,4) pour éjecter le courant de liquide sensiblement suivant ladite direction déterminée, ledit courant de liquide injecté enveloppant le gaz insufflé.

2. Procédé selon la revendication 1, caractérisé en ce que le courant de liquide est prélevé dans le bain à distance de l'injecteur.

3. Procédé selon la revendication 2, caractérisé en ce que le courant de liquide est prélevé au voisinage du fond du bain.

4. Installation de traitement d'un liquide comprenant une cuve (1) de réception d'un bain du liquide (2), un injecteur de gaz (3) plongeant dans la cuve et comportant au moins un débouché (5), et des moyens (7, 8, 6, 4) pour éjecter un courant du liquide du bain au voisinage immédiat du débouché de gaz (5), caractérisée en ce que le débouché de gaz (5) est formé à l'extrémité d'une partie tubulaire stationnaire de l'injecteur s'étendant dans une direction et en ce que les moyens pour éjecter le courant de liquide comprennent un circuit de circulation de liquide (7, 6, 4) comportant une pompe (8) et une partie terminale d'éjection (4) s'étendant sensiblement dans ladite direction, la partie terminale (4) entourant coaxialement la partie tubulaire de l'injecteur.

5. Installation selon la revendication 4, caractérisée en ce que la circuit de circulation de liquide comprend une partie de prélèvement (7) s'étendant au voisinage du fond du bain.

6. Installation selon l'une des revendications 4 et 5, caractérisée en ce que la totalité du circuit de circulation (7, 6, 4) est immergée dans le bain liquide (2).

7. Installation selon l'une des revendications 4 à 6, caractérisée en ce que la partie tubulaire de l'injecteur de gaz est inclinée d'un angle de l'ordre de 40° par rapport à la verticale.

8. Application du procédé selon l'une des revendications 1 à 3 et de l'installation selon l'une des revendications 4 à 7, caractérisée en ce que le liquide en cours de traitement est un liquide métallique avec un point de fusion égal ou inférieur à 750°C.

9. Application selon la revendication 8, caractérisée en ce que le liquide métallique est formé par un ou plusieurs métaux tels que plomb, aluminium, zinc, cadmium, magnésium, étain, lithium, sodium, arsenic, antimoine, le gaz de traitement étant formé par un ou plusieurs gaz tels que $CO_2$, $CO$, $H_2$, $O_2$, $Ar$, $H_2O$ vapeur, $SO_2$, $SF_6$, $CH_4$, hydrocarbures, $Cl_2$.

10. Application du procédé selon l'une des revendications 1 à 3, et de l'installation selon l'une des revendications 4 à 7, caractérisée en ce que le liquide en cours de traitement est un liquide à pulpe alimentaire en cours de refroidissement, et en ce que le gaz de traitement est un gaz cryogénique.

11. Application du procédé selon l'une des revendications 1 à 3, et de l'installation selon l'une des revendications 4 à 7, caractérisée en ce que le liquide en cours de traitement est un liquide à pâte à papier en cours de délignification à l'aide d'un gaz oxydant, oxygène industriel ou peroxyde d'hydrogène.

12. Application du procédé selon l'une des revendications 1 à 3, et de l'installation selon l'une des revendications 4 à 7, caractérisée en ce que le liquide en cours de traitement est du soufre et le gaz $H_2S$ et $O_2$.

**Claims**

1. Process for treatment of a liquid with a treatment gas which is blown in by at least one outlet (5) of a gas injector (3) immersed in a bath (2) of the said liquid simultaneously with the ejection, in the immediate vicinity of the outlet (5), of a stream of the liquid taken from the bath, characterized in that the gas is blown in by the outlet (5) in a determined direction and in that liquid taken from the bath is circulated in a circulation circuit (7, 6, 4) to eject the stream of liquid substantially in the said determined direction, the said injected liquid stream surrounding the gas which is blown in.

2. Process according to Claim 1, characterized in that the stream of liquid is taken from the bath at a distance from the injector.

3. Process according to Claim 2, characterized in that the stream of liquid is taken in the vicinity of the bottom of the bath.

4. Installation for treatment of a liquid, comprising a vessel (1) for receiving a bath of the liquid (2), a gas injector (3) dipping into the vessel and comprising at least one outlet (5), and means (7, 8, 6, 4) for ejecting a stream of the liquid of the bath in the immediate vicinity of the gas outlet (5), characterized in that the gas outlet (5) is formed at the end of a stationary tubular part of the injector extending in one direction and in that the means for ejecting the stream of liquid comprise a liquid circulation circuit (7, 6, 4) comprising a pump (8) and an ejecting end part (4) extending substantially in the said direction, the end part (4) surrounding coaxially the tubular part of the injector.

5. Installation according to Claim 4, characterized in that the liquid circulation circuit comprises a draw-off part (7) extending to the vicinity of the bottom of the bath.

6. Installation according to either of Claims 4 and 5, characterized in that all of the circulation circuit (7, 6, 4) is immersed in the liquid bath (2).

7. Installation according to one of Claims 4 to 6, characterized in that the tubular part of the gas injector is inclined at an angle of the order of 40° in relation to the vertical.

8. Application of the process according to one of Claims 1 to 3, and of the installation according to one of Claims 4 to 7, characterized in that the liquid in the course of treatment is a metallic liquid with a melting point equal to or lower than 750°C.

9. Application according to Claim 8, characterized in that the metallic liquid is formed by one or more metals such as lead, aluminium, zinc, cadmium, magnesium, tin, lithium, sodium, arsenic or antimony, the treatment gas being formed by one or more gases such as $CO_2$, $CO$, $H_2$, $O_2$, $Ar$, $H_2O$ vapour, $SO_2$, $SF_6$, $CH_4$, hydrocarbons and $Cl_2$.

10. Application of the process according to one of Claims 1 to 3, and of the installation according to one of Claims 4 to 7, characterized in that the liquid in the course of treatment is a liquid containing food pulp in the course of cooling and in that the treatment gas is cryogenic gas.

11. Application of the process according to one of Claims 1 to 3, and of the installation according to one of Claims 4 to 7, characterized in that the liquid in the course of treatment is a liquid containing paper pulp in the course of delignification with the aid of an oxidizing gas, industrial oxygen or hydrogen peroxide.

12. Application of the process according to one of Claims 1 to 3, and of the installation according to one of Claims 4 to 7, characterized in that the liquid in the course of treatment is sulphur and the gas $H_2S$ and $O_2$.

**Patentansprüche**

1. Verfahren zum Behandeln einer Flüssigkeit mit einem Behandlungsgas, das man durch mindestens eine Mündung (5) eines in ein Bad (2) besagter Flüssigkeit eingetauchten Gasinjektors (3) gleichzeitig mit dem Ausspritzen eines Stroms der dem Bad entnommenen Flüssigkeit in unmittelbarer Nahe besagter Mündung (5) einbläst, dadurch gekennzeichnet, daß man das Gas in einer bestimmten Richtung durch die Mündung (5) einbläst und daß man dem Bad entnommene Flüssigkeit in einem Kreislauf (7, 6, 4) zirkulieren läßt, um den Flüssigkeitsstrom im wesentlichen entlang der besagten bestimmten Richtung auszuspritzen, wobei der besagte eingespritzte Flüssigkeitsstrom das eingeblasene Gas umhüllt.

2. Verfahren nach Anspruch 1, dadurch gekennzeichnet, daß der Flüssigkeitsstrom in einem Abstand vom Injektor dem Bad entnommen wird.

3. Verfahren nach Anspruch 2, dadurch gekennzeichnet, daß der Flüssigkeitsstrom nahe am Boden des Bads entnommen wird.

4. Apparatur zum Behandeln einer Flüssigkeit, umfassend ein Aufnahmegefäß (1) für ein Flüssigkeitsbad (2), einen in das Gefäß eintauchenden Gasinjektor (3) mit mindestens einer Mündung (5) sowie Mittel (7, 8, 6, 4) zum Ausspritzen eines Badflüssigkeitsstroms in unmittelbarer Nähe der Gasseinmündung (5), dadurch gekennzeichnet, daß die Gaseinmündung (5) am Ende eines feststehenden rohrförmigen, sich in einer Richtung erstreckenden Teils des Injektors ausgebildet ist und daß die Mittel zum Ausspritzen des Flüssigkeitsstroms einen Flüssigkeitskreislauf (7, 6, 4) mit einer Pumpe (8) und einem sich im wesentlichen in besagter Richtung erstreckenden Ausspritzendstück (4) umfassen, wobei das Endstück (4) den rohrförmigen Teil des Injektors coaxial umgibt.

5. Apparatur nach Anspruch 4, dadurch gekennzeichnet, daß der Flüssigkeitskreislauf ein nahe am Boden des Bads befindlichen Entnahmeteil (7) enthält.

6. Apparatur nach einem der Ansprüche 4 und 5, dadurch gekennzeichnet, daß der Kreislauf (7, 6, 4) insgesamt im Flüssigkeitsbad (2) eingetaucht ist.

7. Apparatur nach einem der Ansprüche 4 bis 6, dadurch gekennzeichnet, daß der rohrförmige Teil des Gasinjektors unter einem Winkel von größenordnungsmäßig 40° zur Vertikalen geneigt ist.

8. Anwendung des Verfahrens nach einem der Ansprüche 1 bis 3 und der Apparatur nach einem der Ansprüche 4 bis 7, dadurch gekennzeichnet, daß die zu behandelnde Flüssigkeit eine metallische Flüssigkeit mit einem Schmelzpunkt von 750°C oder niedriger ist.

9. Anwendung nach Anspruch 8, dadurch gekennzeichnet, daß die metallische Flüssigkeit aus einem oder mehreren Metallen wie Blei, Aluminium, Zink, Cadmium, Magnesium, Zinn, Lithium, Natrium, Arsen oder Antimon und das Behandlungsgas aus einem oder mehreren Gasen wie $CO_2$, $CO$, $H_2$, $O_2$, $Ar$, $H_2O$-Dampf, $SO_2$, $SF_6$, $CH_4$, Kohlenwasserstoffen oder $Cl_2$ bestehen.

10. Anwendung des Verfahrens nach einem der Ansprüche 1 bis 3 und der Apparatur nach einem der Ansprüche 4 bis 7, dadurch gekennzeichnet, daß die zu behandelnde Flüssigkeit ein einzufrierender flüssiger Nahrungsmittelbrei und das Behandlungsgas ein Tiefkühlgas ist.

11. Anwendung des Verfahrens nach einem der Ansprüche 1 bis 3 und der Apparatur nach einem der Ansprüche 4 bis 7, dadurch gekennzeichnet, daß die zu behandelnde Flüssigkeit ein flüssiger Papierstoff bei der Entlignifizierung mit Hilfe eines oxidierenden Gases, industriellen Sauerstoffs oder Wasserstoffperoxids ist.

12. Anwendung des Verfahrens nach einem der Ansprüche 1 bis 3 und der Apparatur nach einem der Ansprüche 4 bis 7, dadurch gekennzeichnet, daß die zu behandelnde Flüssigkeit Schwefel und das Gas $H_2S$ und $O_2$ ist.